Europäisches Patentamt

European Patent Office

Office européen des brevets

(11) Veröffentlichungsnummer: **0 371 373**
**A1**

(19)

## (12) EUROPÄISCHE PATENTANMELDUNG

(21) Anmeldenummer: 89121491.8

(22) Anmeldetag: 21.11.89

(51) Int. Cl.⁵: **B23B 13/08**

(30) Priorität: **29.11.88 DE 8814860 U**

(43) Veröffentlichungstag der Anmeldung:
**06.06.90 Patentblatt 90/23**

(84) Benannte Vertragsstaaten:
**DE FR GB IT**

(71) Anmelder: **HAINBUCH PRÄZISIONSSPANNWERKZEUGFABRIK GMBH**
**Erdmannhäuser Strasse 57**
**D-7142 Marbach 1(DE)**

(72) Erfinder: **Nötzel, Uwe**
**Ricarda-Huch-Strasse 14**
**D-7140 Ludwigsburg(DE)**

(74) Vertreter: **Kastner, Hermann, Dipl.-Ing.**
**Osterholzallee 89**
**D-7140 Ludwigsburg(DE)**

(54) **Zuführvorrichtung für die Dämpfungsflüssigkeit in Führungsrohren bei Mehrspindel-Drehmaschinen und dergl.**

(57) Die Zuführung weist eine Haltescheibe (15) auf, in der Durchgangslöcher (21) für die Aufnahme der Führungsrohre (12) vorhanden sind. Die Haltescheibe (10) weist an ihrer Umfangsfläche Führungsflächen (35; 36) auf, mittels der sie an einem Traggestell (14) um eine Drehachse drehbar gelagert ist, die koaxial zur Drehachse der Spindeltrommel der Drehmaschine ausgerichtet ist. Im Bereich der Führungsflächen (35; 36) ist an der Haltescheibe (10) und/oder am Traggestell (14) eine umlaufende Nut (32) als Verteilerkanal vorhanden. In der Haltescheibe (10) ist für jedes Führungsrohr (12) je ein Verbindungskanal (31) vorhanden, der sich von dem Verteilerkanal (32) aus zu einem Durchgangsloch (29) des betreffenden Führungsrohres (12) hin erstreckt. Im Traggestell (14) ist ein Verbindungskanal (41) vorhanden, der den Verteilerkanal (32) mit einer Zuleitung (43) für die Dämpfungsflüssigkeit verbindet.

FIG.2

## Zuführvorrichtung für die Dämpfungsflüssigkeit in Führungsrohren bei Mehrspindel-Drehmaschinen und dergl.

Mehrspindel-Drehmaschinen haben mehrere Stangenführungen für die stangenförmigen Werkstücke, die vom rückwärtigen Ende der Drehmaschine den Arbeitsspindeln abschnittweise zugeführt werden. Diese Zuführung erfolgt unter anderem mechanisch mittels Vorschubzangen. Die Stangenführungen sind im allgemeinen als Führungsrohre ausgebildet, in die die Stangen vom rückwärtigen Ende her bis in die Vorschubzangen hinein eingeschoben werden, die sich in den Arbeitsspindeln befinden. Die Führungsrohre drehen sich nicht. Die stangenförmigen Werkstücke hingegen drehen sich mit den Arbeitsspindeln. Dadurch dreht sich auch der in den Führungsrohren befindliche Längenabschnitt gegenüber den Führungsrohren. Damit bei dieser Relativbewegung der Abrieb sowohl der Werkstücke, wie auch der Führungsrohre nicht zu groß wird und außerdem die Lärmentwicklung möglichst gering gehalten wird, werden die Führungsrohre von einer Dämpfungsflüssigkeit mit Schmiereigenschaften durchströmt. Diese Dämpfungsflüssigkeit muß jedem der Führungsrohre am rückwärtigen Ende einzeln zugeführt werden. Meist sind die Führungsrohre gemeinsam in einem Haltering gehalten, mit dem sie um eine gemeinsame Drehachse umlaufen, und zwar in dem Maße und in dem Drehsinn, in dem die Arbeitsspindeln der Drehmaschine ihre Arbeitsposition wechseln. Die Zuführung der Dämpfungsflüssigkeit erfolgt bisher mittels eines zentralen Zuführrohres, das in der Mitte des Tragringes des Führungsrohres befestigt ist. Vom Ende des Zuführrohres stellen biegsame Schläuche die Verbindung zu den Enden der einzelnen Führungsrohre her.

Diese biegsamen Schläuche sind insbesondere beim Nachladen der Führungsrohre der Gefahr von Beschädigungen ausgesetzt, wobei schon ein einzelner beschädigter Schlauch den Betrieb der Drehmaschine verhindert. Außerdem hat das zentrale Zuführrohr einen verhältnismäßig großen Raumbedarf, da es im Hinblick auf die übrigen Maschinenteile am Ende der Führungsrohre und im Hinblick auf deren Halterung in einem weiten Abstand um diese Maschinenteile herumgeführt werden muß. Dieses vom Haltering aus über das rückwärtige Ende des Führungsrohres nach hinten weit überstehende Zuführrohr behindert die Handhabung der stangenförmigen Werkstücke und das Einführen dieser Werkstücke in die einzelnen Führungsrohre in starkem Maße. Das wiegt umso schwerer, als die Mehrspindeldrehmaschinen in der Regel zu mehreren in einem Werkraum aufgestellt sind und wegen der großen Länge der Werkstücke die räumlichen Verhältnisse ohnehin sehr beengt sind.

Der im Anspruch 1 angegebenen Erfindung liegt die Aufgabe zugrunde, eine Zuführvorrichtung für die Dämpfungsflüssigkeit in den Führungsrohren zu schaffen, die einen geringeren Raumbedarf hat und bei der die Handhabung der Werkstücke durch die Zuführvorrichtung nicht behindert ist.

Dadurch, daß die Zuführleitung für die Dämpfungsflüssigkeit am Traggestell angeschlossen ist und von dort aus die Dämpfungsflüssigkeit in der Ebene des Traggestells über die umlaufende Nut zwischen dem Traggestell und der Tragscheibe in die Verbindungskanäle innerhalb der Tragscheibe und von diesen aus in die Führungsrohre hineingeleitet wird, entfallen sämtliche außenliegenden Leitungen mit Ausnahme der Zuführleitung zum Traggestell. Diese Zuführleitung kann wiederum im Bereich der ohnehin notwendigen Halterung für das Traggestell angeordnet werden, so daß vor allem im Bereich des rückwärtigen Endes der Führungsrohre und in dem Raum dahinter keinerlei Leitungen benötigt werden. Der Raum hinter dem Deckel der Führungsrohre steht damit für die Handhabung der Werkstücke frei zur Verfügung. Es sind dort keine störenden Teile der Zuführvorrichtung vorhanden. Da bei dieser Zuführvorrichtung außenliegende Rohr- und/oder Schlauchleitungen vermieden sind, entfällt auch die Gefahr von Beschädigungen dieser Leitungen beim Handhaben der stangenförmigen Werkstücke. Diese kompakte Bauweise der neuen Zuführvorrichtung bringt noch den Vorteil mit sich, daß sie als Ganzes vormontiert werden kann und dementsprechend auch als Ganzes am Traggestell eines Tragringes bisheriger Bauart auf einfache Weise befestigt werden kann. Dadurch wird zugleich eine sehr kurze Montagezeit und eine dementsprechend kurze Stillstandszeit der Drehmaschine erreicht.

Durch eine Ausgestaltung der Zuführvorrichtung nach Anspruch 2 wird erreicht, daß das Traggestell und die Haltescheibe an den einander zugekehrten Flächen beiderseits der umlaufenden Nut nicht so eng toleriert sein müssen, daß sie selbst als Dichtung wirken. Bei einer Ausgestaltung der Zuführvorrichtung nach Anspruch 3 muß das Durchgangsloch im Führungsrohr nicht mehr auf den zugehörigen Verbindungskanal in der Haltescheibe ausgerichtet werden, sondern kann jede beliebige Drehstellung innerhalb der Haltescheibe einnehmen. Durch die Anordnung von Dichungselementen wird die Abdichtung zwischen den Führungsrohren der Haltescheibe in ähnlicher Weise erleichtert und vereinfacht wie zwischen der Haltescheibe und ihrem Traggestell.

Die Erfindung wird im folgenden anhand eines in der Zeichnung dargestellten Ausführungsbeispieles näher erläutert. Es zeigen:

Fig. 1 eine perspektivische Ansicht einer Mehrspindeldrehmaschine für die Stangenbearbeitung mit einer entsprechenden Anzahl Führungsrohre und mit einer Zuführvorrichtung für die Dämpfungsflüssigkeit am rückwärtigen Ende der Führungsrohre;

Fig. 2 einen Längsschnitt der Zuführvorrichtung nach Fig. 1;

Fig. 3 eine teilweise geschnitten dargestellte Rückansicht der Zuführvorrichtung nach Fig. 1.

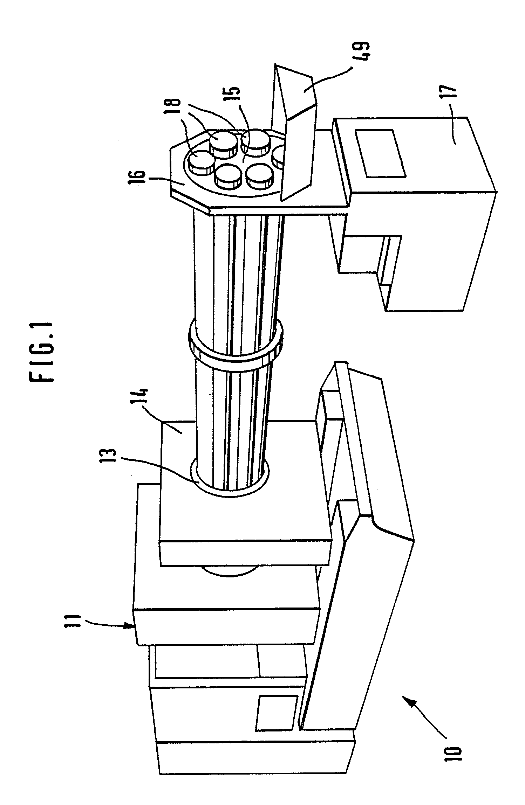

Bei der aus Fig. 1 ersichtlichen Mehrspindel-Drehmaschine 10 erstrecken sich von der Spindeltrommel 11 aus eine Anzahl Führungsrohre 12 nach hinten, in denen die stangenförmigen Werkstücke untergebracht sind, die von der Drehmaschine bearbeitet werden. Die Führungsrohre 12 werden an ihrem der Spindeltrommel 11 zugekehrten vorderen Ende von einer Haltescheibe 13 gehalten, die in einem vorderen Traggestell 14 drehbar gelagert ist. An ihrem hinteren Ende werden die Führungsrohre 12 von einer hinteren Haltescheibe 15 gehalten, die in einem hinteren Traggestell 16 drehbar gelagert ist. Das Traggestell 16 sitzt auf einem Grundgestell 17, in dem unter anderem eine Pumpe für die Förderung einer Dämpfungsflüssigkeit für die Werkstücke in den Führungsrohren untergebracht ist. Die Führungsrohre 12 sind an ihrem hinteren Ende mittels eines Dekkels 18 verschlossen.

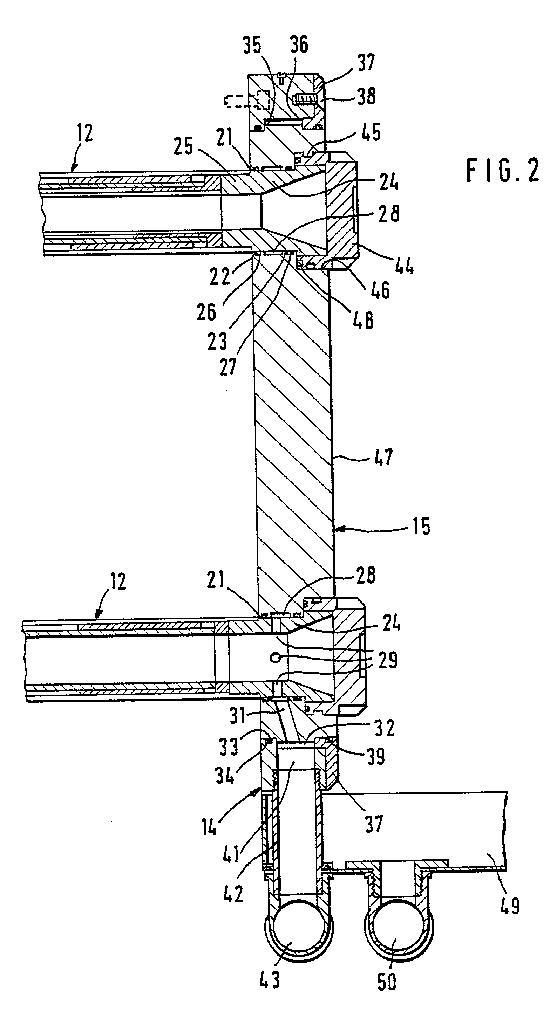

Beide Haltescheiben 13 und 15 weisen für die Aufnahme der Führungsrohre 12 für jedes Rohr ein Durchgangsloch auf, das im folgenden als Aufnahmeloch 21 bezeichnet wird (Fig. 2). Jedes Aufnahmeloch 21 ist kreiszylindrisch ausgebildet und weist zwei Längenabschnitte 22 und 23 auf, die untereinander den gleichen Innendurchmesser haben, der auf den Außendurchmesser des als Führungsabschnitt 24 dienenden Teils des Endabschnittes 25 des Führungsrohres 12 abgestimmt ist. Im axialen Bereich der beiden Längenabschnitte 22 und 23 ist je eine Umfangsnut vorhanden, in die je ein elastisches Dichtungselement in Form eines Rundschnurringes 26 bzw. 27 eingelegt ist. Diese Rundschnurringe 26 und 27 bilden zusammen mit der ihnen gegenüberstehenden Umfangsfläche des Führungsabschnittes 24 je eine Dichtung.

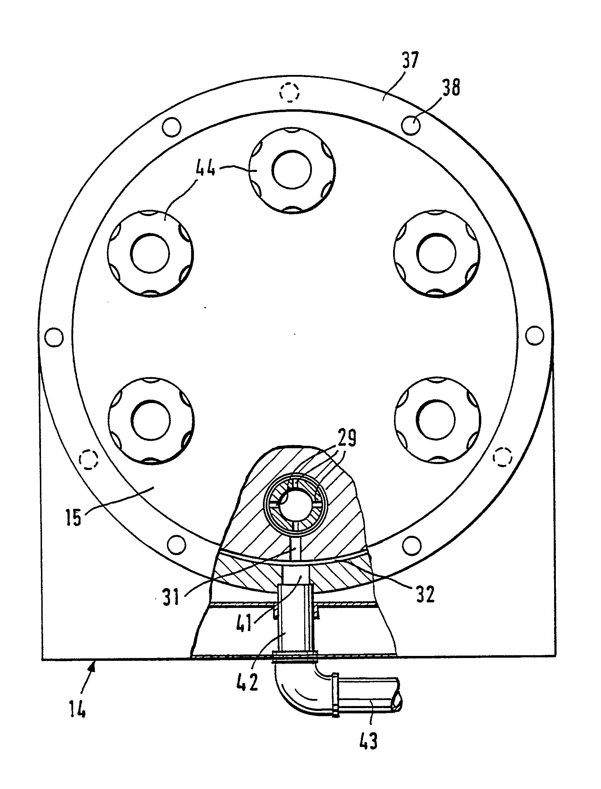

Zwischen den beiden Längenabschnitten 23 und 24 ist in der Haltescheibe 15 je eine umlaufende Nut 28 vorhanden. Sie dient als Verteilernut für die Dämpfungsflüssigkeit. Wie im unteren Teil der Fig. 2 zu ersehen ist, sind in dem axialen Bereich der Verteilernut 28 im Führungsabschnitt 24 des Führungsrohres 12 vier radial ausgerichtete Durchgangslöcher 29 (Fig. 2 und 3) vorhanden, durch die der Innenraum des Führungsrohres 12 mit der Verteilernut 28 verbunden ist.

In der Haltescheibe 15 ist für jede der Verteilernuten 28 je ein Verbindungskanal 31 vorhanden, der zumindest annähernd radial ausgerichtet ist und der einerseits in der Verteilernut 28 im Bereich des Durchgangsloches 21 mündet und der andererseits in eine umlaufende Nut 32 mündet, die im Bereich der Umfangsfläche der Haltescheibe 15 angeordnet ist und dort als Verteilernut für die Dämpfungsflüssigkeit dient.

Für die Aufnahme der Haltescheibe 15 mit kreisförmiger Umrißlinie weist das Traggestell 14 eine kreisförmige Ausnehmung 33 auf, deren Innendurchmesser auf den Außendurchmesser des ihr gegenüberstehenden Abschnittes der Umfangsfläche der Haltescheibe 15 in der Weise abgestimmt ist, daß diese Flächen ein Radiallager bilden. In diesem Längenabschnitt der Ausnehmung 33 ist eine umlaufende Nut vorhanden, in die ein elastisches Dichtungselement in Form eines Rundschnurringes 34 eingelegt ist. Dieser bildet mit der ihm gegenüberstehenden Umfangsfläche der Haltescheibe 15 eine Dichtung für die durch die Verteilernut 32 hindurchströmende Dämpfungsflüssigkeit.

Wie aus Fig. 2 zu ersehen ist, sind sowohl die Wand der Ausnehmung 33 im Traggestell 14 wie auch die Umfangsfläche der Haltescheibe 15 zweimal abgesetzt, so daß ebene kreisringförmige Führungsflächenpaare 35 und 36 gebildet werden. Bei dem an der hinteren Seite der Haltescheibe 15 gelegenen Führungsflächenpaar 36 wird die außenliegende Führungsfläche durch die Stirnfläche eines in die Ausnehmung 34 hineinragenden Kragens eines Führungsringes 37 gebildet, der mittels Schrauben 38 mit dem Traggestell 14 abnehmbar verbunden ist, damit die Haltescheibe 15 in die Ausnehmung 34 eingesetzt werden kann.

Auf der Innenseite des Führungsringes 37 ist ebenfalls eine umlaufende Nut vorhanden, in die ein elastisches Dichtungselement in Form eines Rundschnurringes 39 eingelegt ist. Dieser bildet mit der ihm gegenüberstehenden Umfangsfläche der Haltescheibe 15 die zweite Dichtung für die durch die Verteilernut 32 hindurchströmende Dämpfungsflüssigkeit.

Die Dämpfungsflüssigkeit wird der Verteilernut 32 über eine radial ausgerichtete Bohrung 41 im Traggestell 14 zugeführt, in die ein Anschlußstutzen 42 eingeschraubt ist. Daran ist eine Zuleitung 43 angeschlossen, die von der im Grundgestell 17 untergebrachten Förderpumpe mit der Dämpfungsflüssigkeit versorgt wird.

Während des Betriebes der Drehmaschine sind die Führungsruhre 12 an ihrem hinteren Ende durch je einen Deckel 44 verschlossen. Er wird durch einen Renkverschluß 45 (Bajonettverschluß) in einer Ausnehmung 46 in der hinteren Stirnseite 47 der Haltescheibe 15 festgehalten. Jeder Deckel 44 weist an seiner der Haltescheibe 15 zugewandten Stirnseite eine umlaufende Nut auf, in die ein Dichtungselement in Form eines Rundschnurringes 48 eingelegt ist, der mit der ihm gegenüberstehenden kreisringförmigen Stirnseite der Ausnehmung 46 eine Dichtung bildet.

Beim Öffnen eines der Deckel 44 muß selbst bei abgestellter Förderpumpe damit gerechnet werden, daß aus dem betreffenden Führungsrohr 12 eine gewisse Menge der Dämpfungsflüssigkeit aus dem dann offenen Führungsrohr 12 austritt. Zu diesem Zweck ist am hinteren Traggestell 16 an dessen Rückseite eine Auffangwanne 49 angeordnet, die die aus den geöffneten Führungsrohren 12 austretende Dämpfungsflüssigkeit auffängt und über eine Leitung 50 in einen Vorratsbehälter der Förderpumpe im Grundgestell 17 zurückleitet.

**Ansprüche**

1. Zuführvorrichtung für die Dämpfungsflüssigkeit in Führungsrohren bei Mehrspindeldrehmaschinen, mit den Merkmalen:
- das von der Spindeltrommel der Drehmaschine abgekehrte rückwärtige Ende der Führungsrohre ist an einem gemeinsamen Halter befestigt,
- der Halter ist mittels eines Drehlagers um die zentrale Drehachse der Spindeltrommel drehbar gelagert,
- jedes Führungsrohr ist über eine Verbindungsleitung mit einer gemeinsamen Zuführleitung für die Dämpfungsflüssigkeit verbunden,
- jedes Führungsrohr ist am rückwärtigen Ende mittels eines Deckels verschlossen,
**gekennzeichnet** durch die Merkmale:
- der Halter für die Führungsrohre (12) ist als Haltescheibe (15) mit kreisförmiger Umrißlinie ausgebildet, die an ihrem Umfang wenigstens eine Lagerfläche aufweist,
- die Haltescheibe (15) ist in einem Traggestell (14) drehbar gelagert, das eine kreisförmige Ausnehmung (33) mit wenigstens einer Lagerflächen für die Haltescheibe (15) aufweist,
- die Haltescheibe (15) weist je ein Durchgangsloch (21) für die Aufnahme und Halterung je eines Führungsrohres (12) auf,
- an der Wandfläche der Ausnehmung (33) des Traggestells (14) und/oder an der Umfangsfläche der Haltescheibe (15) ist eine umlaufende Nut (32) vorhanden,
- in der Haltescheibe (15) ist für jedes Führungsrohr (12) je ein Verbindungskanal (31) vorhanden, der an seinem einen Ende im Bereich der umlaufendenn Nut (32) und an seinem anderen Ende im axialen Bereich eines Durchgangsloches (29) im Führungsrohr (12) mündet,
- im Traggestell (14) ist ein Verbindungskanal (41) vorhanden, der an seinem einen Ende in die umlaufende Nut (32) mündet und an dessen anderem Ende die Zuführleitung (43) für die Dämpfungsflüssigkeit angeschlossen ist.

2. Zuführvorrichtung nach Anspruch 1,
**gekennzeichnet** durch das Merkmal:
- im Axialbereich zwischen der umlaufenden Nut (33) und jeder der beiden Stirnflächen der Haltescheibe (15) ist am Traggestell (14) oder an der Haltescheibe (15) wenigstens ein vorzugsweise elastisches Dichtungselement (34; 39) angeordnet, das mit einer ihm gegenüberstehenden umlaufenden Fläche des anderen Teils eine Dichtung bildet.

3. Zuführvorrichtung nach Anspruch 1 oder 2,
**gekennzeichnet** durch die Merkmale:
- in der Umfangswand des Aufnahmeloches (21) für die Führungsrohre (12) und/oder an dem Längenabschnitt (24) der Führungsrohre (12), der sich im axialen Bereich des Aufnahmeloches (21) befindet, ist eine umlaufende Nut (28) vorhanden, in die der betreffende Verbindungskanal (31) mündet,
- an jedem Führungsrohr (12) ist das Durchgangsloch (29) in seiner Wand im axialen Bereich der umlaufenden Nut (28) angeordnet,
- vorzugsweise sind im axialen Bereich zwischen der umlaufenden Nut (28) und jeder der bei den Stirnflächen der Haltescheibe (15) an der Haltescheibe (15) oder art dem Führungsrohr wenigstens ein Dichtungselement (26; 27) angeordnet, das mit der ihm gegenüberstehenden umlaufenden Wandfläche des anderen Teils ((24) eine Dichtung bildet.

FIG.1

FIG. 2

Europäisches
Patentamt

**EUROPÄISCHER RECHERCHENBERICHT**

Nummer der Anmeldung

## EINSCHLÄGIGE DOKUMENTE

EP 89121491.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl. X 5 |
|---|---|---|---|
| A | <u>CH - A5 - 641 073</u><br>(LNS S.A)<br>  * Gesamt *<br><br>-- | 1,3 | B 23 B 13/08 |
| A | <u>US - A - 4 577 536</u><br>(LNS S.A.)<br>  * Fig. 3-7 *<br><br>---- | 1,3 | |

RECHERCHIERTE
SACHGEBIETE (Int. Cl. X 5

B 23 B 13/00
B 23 B  9/00
B 23 Q 11/00

Der vorliegende Recherchenbericht wurde für alle Patentansprüche erstellt.

| Recherchenort | Abschlußdatum der Recherche | Prüfer |
|---|---|---|
| WIEN | 30-01-1990 | BRÄUER |